Europäisches Patentamt

(19) European Patent Office

Office européen des brevets

(11) Publication number: **0 097 553**

**A2**

(12) **EUROPEAN PATENT APPLICATION**

(21) Application number: **83401096.9**

(22) Date of filing: **31.05.83**

(51) Int. Cl.³: **G 01 N 27/46**

(30) Priority: **04.06.82 US 385229**

(43) Date of publication of application:
**04.01.84 Bulletin 84/1**

(84) Designated Contracting States:
**DE FR GB IT**

(71) Applicant: **THE BENDIX CORPORATION**
**Executive Offices Bendix Center**
**Southfield Michigan 48037(US)**

(72) Inventor: **Patton, Jesse Carl**
**3918 St. Johns Lane**
**Ellicott City Maryland 21043(US)**

(72) Inventor: **Sharma, Rabinder Kumer**
**118 Kettle Ct.**
**Baltimore Maryland 21207(US)**

(72) Inventor: **Taylor, Cuthbert Donald**
**14421 Gunstock Ct.**
**Silver Spring Maryland 20906(US)**

(72) Inventor: **Thakore, Yatin Bansairo**
**5901-3 Tamar Drive**
**Columbia Maryland 21045(US)**

(74) Representative: **Brullé, Jean et al,**
**Service Brevets Bendix 44, rue François 1er**
**F-75008 Paris(FR)**

(54) Hydrophilic membrane oxygen sensor.

(57) An oxygen sensor having an anode (18) and a cathode (16) spatially separated by a thin structurally rigid hyrophilic membrane (12). The hydrophilic membrane (12) is the host for a liquid electrolyte and confines the liquid electrolyte within the region between and in physical contact with anode (18) and cathode (16). An oxygen permeable membrane (24) disposed over the cathode (16) controls the quantity of oxygen reaching the cathode (16) and inhibits the evaporation of the liquid electrolyte.

Fig-1

-1-

## HYDROPHILIC MEMBRANE OXYGEN SENSOR

### Cross Reference

The invention is related to the invention disclosed in co-pending EP application entitled "Chemical Sensors having a Hydrophilic Membrane as the Electrolyte Media" filed same date.

### Background of the Invention

#### Field of the Invention

The invention is related to chemical sensors and in particular to an oxygen sensor having a hydrophilic membrane as the liquid electrolyte media.

#### Prior Art

Chemical sensors comprising an electrochemical cell with an electrolyte disposed between a cathode and an anode are well known in the art. These sensors may be divided into two categories, those having ion-selective membrane electrodes such as disclosed by Genshaw et al in U.S. patent 3,856,649, by Battaglia et al in U.S. Patent 4,214,968 and by Chang et al in U.S. Patent 4,282,079 and those having gas permeable membranes such as disclosed by Niedrach in U.S. Patents 3,811,184; 3,714,015 and 3,705,088 by Parker in U.S. Patent 4,269,685 and by Garst in U.S. Patent 3,272,725.

Genshaw et al, Battaglia et al and Chang et al disclose dried electrolyte solutions which comprise a salt in solid solution with a hydrophilic binder or a

-2-

salt in solution with a hydrated gel. Niedrach et al disclosed ion exchange resin electrolytes such as quarternized polystyrene. Both Parker and Garst disclose electrolytes immobilized in a gel such as agar or agarose. The end affect of the prior art was to immobilize the electrolyte by placing it in solution with a solid or gelatinous type binder. For any given volume this approach significantly reduces the quantity of electrolyte available for the desired chemical reaction and inhibits ion mobility.

## Summary of the Invention

The invention is an oxygen sensor having a hydrophilic membrane saturated with a potassium-chloride electrolyte in a fluid state. A porous noble metal cathode is disposed over one surface of the hydrophilic membrane and in physical contact with the electrolyte and a silver anode is disposed over the other surface of the hydrophilic membrane and in physical contact with the electrolyte. The porous noble metal cathode is further overlayed with a thin layer of teflon or other oxygen porous material which also inhibits the evaporation of the electrolyte's solvent and controls the concentration of the oxygen reaching the cell. In the preferred embodiment, the solvent of the potassium chloride electrolyte is ethylene glycol but other solvents, including water, can be utilized.

One advantage of the oxygen sensor is that the liquid electrolyte-hydrophilic membrane element is structurally stable. Another advantage of the invention is that the ion mobility in the liquid electrolyte is greater than in the solid or gelatinous binders taught by the prior art. Another advantage of the oxygen sensor is that the quantity of electrolyte absorbed in the hydrophilic membrane, is greater than can be obtained with the electrolyte immobilization techniques used in the prior art. The quantity of electrolyte in the electrolyte membrane by weight is more than 70 percent of the total weight of the electrolyte saturated membrane. These and other advantages of the oxygen sensor will become apparent from reading the detailed description of the invention in combination with the drawings.

## Brief Description of the Drawings

FIGURE 1 is a cross section showing the general configuration of a hydrophilic membrane sensor.

FIGURE 2 is a cross section of a first embodiment of a hydrophilic membrane polarographic oxygen sensor.

FIGURE 3 is a polarogram showing the current voltage characteristics of a typical hydrophilic membrane oxygen sensor.

FIGURE 4 is a graph showing the oxygen sensitivity of the hydrophilic membrane oxygen sensor.

FIGURE 5 is a cross section of a cylindrical hydrophilic membrane oxygen sensor.

FIGURE 6 is a transverse cross section of the cylindrical membrane oxygen sensor shown in FIGURE 5.

FIGURE 7 is a cross section of a potentiometric hydrophilic membrane oxygen sensor.

## Detailed Description of the Invention

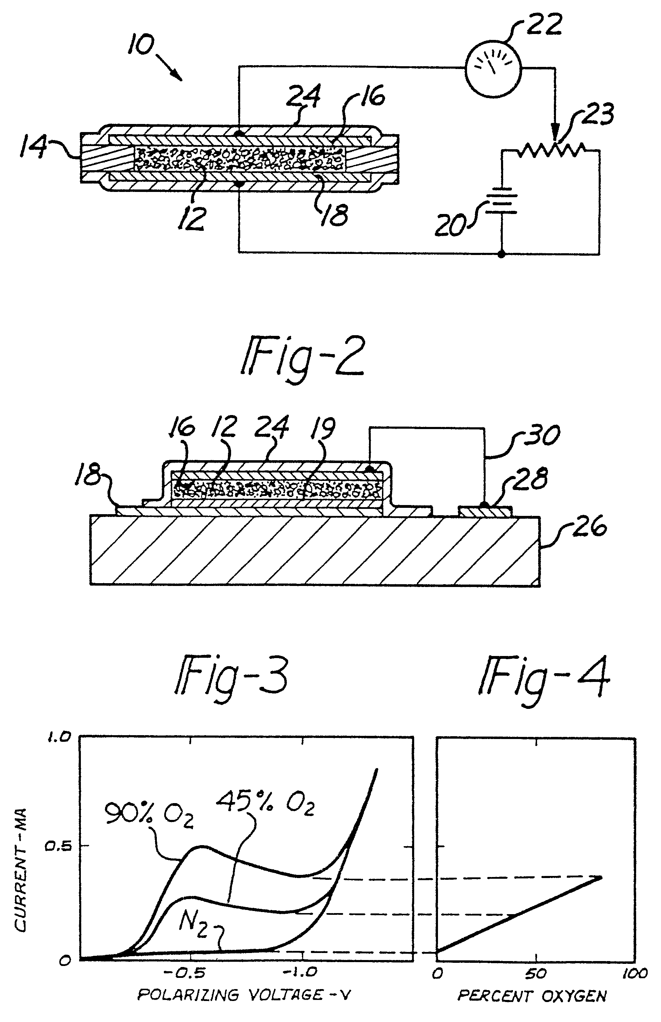

Referring to FIGURE 1 there is shown the basic embodiment of a hydrophilic membrane chemical sensor 10. The sensor comprises a thin hydrophilic membrane 12 saturated with an electrolyte consisting of an ionic salt dissolved in an appropriate solvent. The electrolyte may also contain buffers and other agents typically found in

-4-

classical electrolytes or gels of the prior art. A spacer 14 may be provided about the periphery of the membrane 12 to provide edge support and increase the mechanical strength of the structure.

A porous cathode 16 is disposed over one surface of the membrane 12 in physical and electrical contact with the electrolyte. An anode 18 is disposed over the opposite surface of the membrane 12 in physical and electrical contact with the electrolyte. This configuration represents the classical electrolytic chemical sensor having an electrolyte disposed between physically separate anode and cathode electrodes.

The anode 18 is adapted to be connected to a positive source of electrical potential, illustrated as the postive pole of a battery 20, while the cathode is adapted to be connected to a negative source of electrical potential illustrated as the negative pole of battery 20. An electrical current detector illustrated as a meter 22 is disposed in series between the anode 18 and cathode 16. The electrical current detector 22 may be disposed between the cathode 16 and battery 20 as shown or alternatively between the anode 18 and battery 20 as is known in the art. A variable resistance element 23 may be used to adjust the voltage between the anode 18 and cathode 16 as required.

In the illustration of FIGURE 1, the thickness of the membrane 12, cathode 16, and anode 18 are exaggerated to more clearly show the structural details of the sensor. In a typical application, the membrane 12 is an cellulose triacetate structure having the thickness in the range from 0.1 to 1.0 millimeters. These membranes are commercially available in sheet or cylindrical form from Moleculon Research Incorporated of Cambridge Massachusetts or may be made as taught by Nichols in U.S. patent 3,846,404. It is recognized that cellulose triacetate is not the only material from which the membrane may be made and other hydrophlic membranes, such as polyvinylalcohol or hydroxyethylmetharcylate membranes may be used in place of the cellulose triacetate membrane without departing from the spirit of the invention.

The sensor takes the form of a gas sensor in which the membrane 24 is selectively permeable to a selected gas or gases but hydraulically impermeable to the liquid electrolyte. In this case, the gas or gases sought to be detected passes through the membrane 24 to the porous cathode 16 where it is electrochemically reduced. Gas sensors of this type have been disclosed by Parker in U.S. patent 4,269,685 and Niedrach et al in U.S. patents 3,673,069  3,705,088  and  3,811,184.   The primary difference between the disclosed chemical sensor and the prior art is that the electrolyte in the disclosed sensor is entrapped in a liquid state in the dimensionally stable hydrophilic membrane whereas both Parker and Niedrach et al disclose the electrolyte disposed in an immobilized resin or gel.

The hydrophilic membrane chemical sensor will now be discussed with reference to an oxygen sensor as illustrated in Figure 2. Referring now to Figure 2 an electrically conductive silver anode 18 overlayed with a thin layer of silver chloride 19 is disposed on the surface of a structurally rigid non-conductive substrate 26. The substrate 26 may be a structural plastic, glass, quartz or semiconductor material. A thin hydrophilic membrane 12 saturated with a potassium chloride (KCl) electrolyte solution is positioned over the anode 18 with the electrolyte in physical and electrical contact with the adjacent silver chloride surface of the anode. A porous noble metal cathode 16 such as a gold or platinum cathode is disposed over the other surface of the hydrophilic membrane 12 and in physical and electrical contact with the potassium chloride electrolyte. A thin layer of teflon, polyethylene or other suitable material 24, permeable to oxygen gas is overlayed over the cathode 16 and bonded to the substrate 26 to form a hydraulic seal about the saturated hydrophilic membrane 12.

The porous cathode 16 may be a thin wire mesh or may be a metallic grid vacuum deposited or sputtered onto the suface of the oxygen porous overlay 24 facing the hydrophilic membrane 12 prior to being placed thereover. An electrical lead 30 connects the cathode 16 to an electrical contact 28 deposited on the surface of the substrate 26. Electrical contact to the oxygen sensor is achieved through the exposed portion of anode 18 and the electrical contact 28.

The solvent of the potassium chloride electrolyte is preferably ethylene glycol or a mixture of water and ethylene glycol having a low voltatility and large hydrophilicity (water like nature). However, other solvents known in the art, including water, may be used. Ethylene glycol is the prefered solvent since its use in combination with the hydraulic seal provided by the oxygen permeable membrane 24 provides maximum life of the sensor.

The replacement of the potassium chloride-ethylene glycol electrolyte in the membrane for water is achieved by diffusional exchange. A water saturated membrane is first placed in an ethylene glycol solution having a volume of at least 10 times the capacity of the membrane and allowed to soak for a period of approximately 12 hours. After 12 hours, the remaining ethylene glycol is removed and replaced with a fresh solution. This process is repeated approximately 4 times over a period of two days and results in a saturated membrane where the ethylene glycol represents 70% to 80% of the total weight of the ethylene glycol saturated membrane.

The ethylene glycol saturated membrane is then placed in a potassium chloride-ethylene glycol electrolyte solution having a predetermined molar concentration. The electrolyte and membrane are then vigorously shaken until an equilibrium condition of the molar concentration of the potassium chloride electrolyte inside and outside the membrane is obtained. This equilibrium is normally obtained within a 24 hour period. Measurement of the molar concentration of the free electrolyte outside the membrane at equilibrium has shown that the solvent-membrane system has approximately the same affinity for the potassium chloride as the free solvent outside of the hydrophilic membrane. Therefore the molar concentration of potassium chloride electrolyte inside of the membrane is approximately the same as the molar concentration of the potassium chloride electrolyte outside of the membrane.

A polarogram and sensitivity plot of an oxygen sensor having a hydrophilic membrane saturated with a potassium chloride-ethylene glycol electrolyte are illustrated in Figures 3 and 4 respectively.

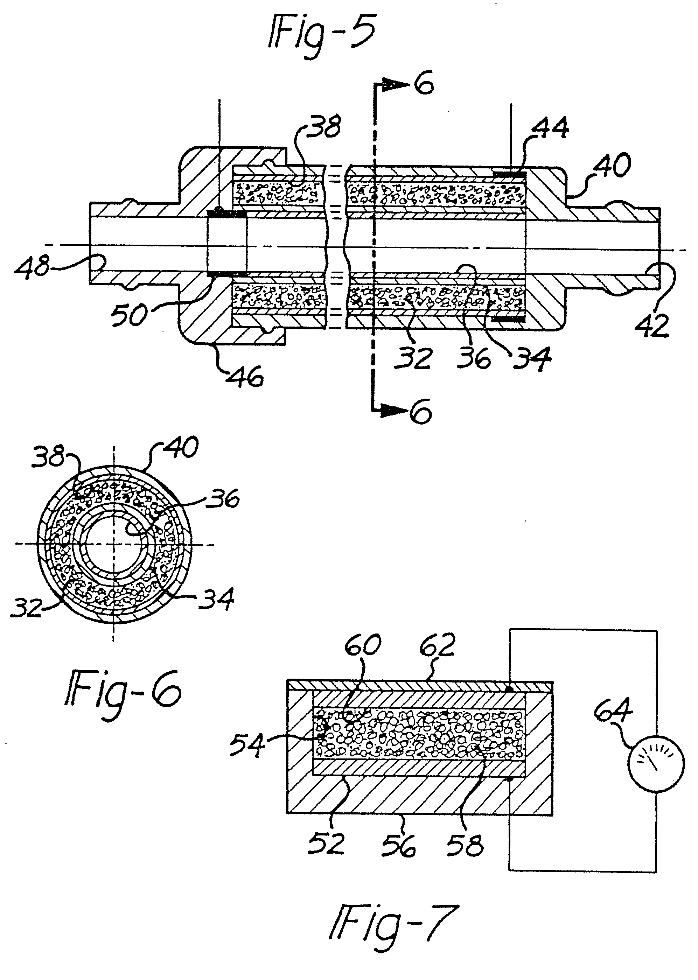

An alternate embodiment of the hydrophilic membrane oxygen sensor is illustrated in Figures 5 and 6. Referring to Figures 5 and 6, the hydrophilic membrane 32 is formed in the shape of a hollow cylinder. As in previous embodiments, the hydrophilic membrane cylinder is saturated with an electrolyte solution, such as the potassium chloride-ethylene glycol electrolyte discussed relative to Figure 2. A porous cathode 34 is disposed along the inner surface of the hydrophilic membrane cyliner 32 and overlayed with an oxygen permeable membrane 36. The external surface of the hydrophilic membrane cylinder 32 is overlayed with an electrically conductive anode 38. The entire assembly is then encased in a cylindrical housing 40 of a non conducting material having an inlet port 42 disposed at one end thereof concentric with the hydrophilic membrane cylinder. An electrical contact member 44 makes electrical contact with the anode 38 when the hydrophilic membrane assembly is inserted. The contact member 44 may be a metal ring embedded in the internal surface of the housing 40 having spring loaded fingers engaging the anode surface.

A cap 46 encloses the opposite end of the housing 40 and has an outlet 48 concentric with the hydrophilic membrane cylinder. The cap 46 also includes a second electrical contact 50 engaging the porous cathode. The cap 46 may be attached to the housing 40 by any means known in the art, such as by gluing, welding, snap locks twist locks etc. In this embodiment, the sensor will detect the oxygen concentration of a fluid flowing between the inlet and outlet ports.

Since the electrolyte is confined in the hydrophilic membrane, the hydrophilic membrane oxygen sensor can be handled and applied as if it were a solid state device yet preserves all the attributes of a wet chemical sensor. Furthermore it can be made extremely small and almost to any desired configuration. These characteristics make the hydrophilic membrane oxygen sensor applicable to a wide variety of embodiments. In particular, the hydrophilic membrane oxygen sensor may be disposed on a small silicon chip corresponding to the silicon chips used in current integrated circuits. Existing silicon etching and fabrication technology is directly applicable to the fabrication of the sensor. For example, the sensor may be embodied as an electrolytic oxide semiconductor (EOS) device with the oxygen sensor and associated electronics formed directly on the silicon ship. Alternatively the sensor may be embodied in the form of a chemical field effect transistor (Chem FET) where the anode of the oxygen sensor functions as the control gate of the field effect transistor.

A hydrophilic membrane saturated with a liquid electrolyte may also be used in a potentiometric sensor as illustrated in FIGURE 7. Referring to FIGURE 7 an anode 52 made from an appropriate metal, such as lead, is disposed in the well 54 of a non conductive base 56. Base 56 may be made from a structural plastic, glass, quartz, or semiconductor material. A hydrophilic membrane 58 saturated with liquid electrolyte such an aqueous solution of potassium hydroxide (KOH) is disposed over the anode 52 with the electrolyte in physical and electrical contact with the anode. A porous electrically conductive cathode 60 such as a gold wire mesh is disposed over the hydrophilic membrane 58 in physical and electrical contact with the electrolyte. The entire assembly is overlayed with a gas permeable membrane 62 such as a thin layer of teflon which is impervious to the liquid electrolyte. A voltage sensor, such as volt meter 64 measures the electrical potential generated between the anode 52 and cathode 60 in response to the electrochemical reduction of the oxygen gas permeating through the permeable membrane 62 at the surface of the cathode. The lead anode is oxidized. The potential generated between the anode 52 and cathode 60 will have a value corresponding to the concentration of oxygen in the sample being detected by the sensor.

It is not intended that the disclosed oxygen sensor invention be limited to the particular hydrophilic membrane, anode and cathode materials, electrolytes, or configurations illustrated and discussed herein. It is recognized that those skilled in the art are well capable of using the different anode and cathode materials and electrolytes well known in the art or make other changes without departing from the spirit of the invention as disclosed herein and set forth in the appended claims:

Claims:

1. An improved oxygen chemical sensor having at least two spatially separated electrodes (16, 18) disposed in a liquid electrolyte electrochemically reactive with oxygen, the improvement characterized by a structurally integral hydrophilic membrane (12) disposed between said spatially separated electrodes (16, 18), said hydrophilic membrane (12) hosting said electrolyte keeping it in an immobolized state between and in physical and electrical contact with said electrodes.

2. The oxygen sensor of Claim 1 further including:
   means (23) for applying a potential between said electrodes (16, 18); and
   means (22) associated with said means for applying a potential for measuring the current through said sensor as a function of the quantity of oxygen reacting at one of said electrodes.

3. The oxygen sensor of Claim 1 wherein one of said two electrodes (16, 18) is an electrically conductive oxygen porous cathode (16) and the other of said electrodes is an electrically conductive anode (18).

4. The oxygen sensor of Claim 3 wherein said electrolyte is a solution of potassium chloride in a solvent, said porous cathode is gold and said anode is silver coated with a thin layer of silver chloride.

5. The oxygen sensor of Claim 4 wherein said electrolyte solvent is ethylene glycol.

6. The oxygen sensor of Claim 5 further including an oxygen permeable membrane (24) overlaying said porous cathode (16).

7. The oxygen sensor of Claim 3 wherein said hydrophilic membrane (12) is a hollow cylinder (32) and wherein said cathode (34) interfaces the internal surface of cylindrical hydrophilic membrane (32) and said anode (38) interfaces the external surface of said cylindrical membrane (32).

8. The oxygen sensor of Claim 7 further including an oxygen porous membrane (36) overlaying said cathode.

9. The oxygen sensor of Claim 5 wherein said electrolyte is a solution of potassium chloride in a solvent and wherein said cathode (34) is noble metal and said anode (38) is silver coated with a thin layer of silver chloride.

10. The oxygen sensor of Claim 9 wherein said cathode (34) is gold.

11. The oxygen sensor of Claim 9 wherein said solvent is ethylene glycol.

12. The oxygen sensor of Claim 9 further including an oxygen porous membrane (36) overlaying said cathode (34) on the internal surface of said hydrophilic membrane (32).

13. The oxygen sensor of Claim 12 further including housing means (40, 46) for conducting the fluid to be tested through the volume defined by the internal surface of said hydrophilic membrane (32).

14. The oxygen sensor of Claim 1 further including means (64) for measuring a potential generated between said two electrodes (16, 18) in response to said one electrode reacting with oxygen gas.

15. The oxygen sensor of Claim 14 wherein said electrolyte is an aqueous solution of alkali metal hydroxide, one of said two electrodes (16, 18) is a lead anode (52) and the other is a porous noble metal·cathode (60).

16. The oxygen sensor of Claim 14 further including an oxygen porous membrane (62) overlaying said porous cathode (60).

Fig-1

Fig-2

Fig-3

Fig-4

Fig-5

Fig-6

Fig-7